# EUROPEAN PATENT SPECIFICATION

(11) **EP 1 185 770 B1**
(45) Date of publication and mention of the grant of the patent: **06.04.2005**
(21) Application number: 00941084.6
(22) Date of filing: 09.06.2000
(51) Int. Cl.: F02D 13/02, F02D 33/02

(54) **METHOD OF REDUCING EMISSIONS IN THE EXHAUST GASES OF AN INTERNAL COMBUSTION ENGINE**
VERFAHREN ZUR ABGASREINIGUNG VON BRENNKRAFTMASCHINEN
PROCEDE POUR REDUIRE LES EMISSIONS DES GAZ D'ECHAPPEMENT D'UN MOTEUR A COMBUSTION INTERNE

(30) Priority: 11.06.1999 SE 9902217
(43) Date of publication of application: 13.03.2002
(73) Proprietor: Volvo Personvagnar AB, 405 08 Göteborg (SE)
(72) Inventor: ALLEVAG, Lars, S-415 22 Gothenburg (SE); ALMKVIST, Göran, S-443 41 Grabo (SE); BREDSTRÖM, Ingmar, S-411 24 Gothenburg (SE); THORN, Karin, S-414 62 Gothenburg (SE)
(74) Representative: Hellbom, Lars Olof
(86) International application number: PCT/SE2000/001214
(87) International publication number: WO 2000/077369

(56) References cited:
- EP-A1- 0 735 246
- EP-A1- 0 761 950
- EP-A1- 0 814 237
- DE-A1- 4 016 226
- US-A- 5 845 613

## Description

The present invention relates to a method of reducing emissions in the exhaust gases from an internal combustion engine which comprises at least one cylinder to which an air/fuel mixture is supplied when a crankshaft of the internal combustion engine is to be made to rotate, at least one intake valve, at least one exhaust valve, control members for controlling the opening and closing of the intake and exhaust valves, and a piston reciprocating between a top dead-centre position and a bottom dead-centre position in the cylinder, which exhaust valve is controlled so that it opens before the piston has passed the bottom dead-centre position and closes before the intake valve opens (see for example EP-A-735246 or US-A- 5845613)

In internal combustion engines, it is desirable to reduce the undesirable emissions present in the exhaust gases of the internal combustion engine in order thus to reduce pollution of the surrounding environment and to satisfy legal requirements for internal combustion engines. The undesirable emissions present in the exhaust gases include inter alia carbon monoxide CO, hydrocarbon compounds HC and nitrogen oxides NOx.

In order to reduce these emissions in the exhaust gases, the internal combustion engine is provided with a catalytic converter which, by means of a chemical reaction, burns the abovementioned emissions completely. The chemical reaction in the catalytic converter occurs only when the catalytic converter has reached a predetermined working temperature which is reached after a predetermined operating time of the internal combustion engine. When the internal combustion engine is cold-started, there is therefore no reduction of the abovementioned emissions in the catalytic converter.

There are known arrangements which heat the catalytic converter when the internal combustion engine is cold-started for the purpose of rapidly reaching a desirable working temperature of the catalytic converter so as thus to make it possible to reduce said emissions in the exhaust gases of the internal combustion engine at an early stage. In such a known arrangement, an electric heating element is arranged in the catalytic converter. This arrangement makes the catalytic converter complicated and expensive to produce.

Another problem which arises when internal combustion engines are cold-started is that a comparatively great amount of fuel in relation to the air supplied, that is to say a rich air/fuel mixture, has to be supplied to the internal combustion engine in order that the internal combustion engine will start and the internal combustion will be capable of working at an essentially constant speed during idle running. This rich air/fuel mixture is also supplied in order that the internal combustion engine will be ready to provide increased torque when the accelerator is operated. The drivability of the internal combustion engine is thus ensured before the internal combustion engine has reached its operating temperature.

The absence of emission control in the catalytic converter and the rich air/fuel mixture result in the content of carbon monoxide CO, hydrocarbon compounds HC and nitrogen oxides NOx emitted from the internal combustion engine being high when the internal combustion engine is cold-started.

Attempts have previously been made to reduce the quantity of fuel in relation to the air supplied, that is to say to run the internal combustion engine with a leaner air/fuel mixture when the internal combustion engine is cold-started. This has nevertheless led to the internal combustion engine working very unevenly when idling and also the drivability of the internal combustion engine being poor. The reason why the speed varies during idle running is that the torque generated by the internal combustion engine is very sensitive to variations in the lambda value of the air/fuel mixture supplied to the cylinder space of the internal combustion engine when the air/fuel mixture is lean. The definition of the lambda value, or the excess air factor as it is also known, is the actual air quantity supplied divided by the air quantity theoretically necessary for complete combustion. If the lambda value is greater than 1, the air/fuel mixture is lean and, if the lambda value is smaller than one, the air/fuel mixture is rich.

The fuel supplied from a fuel injection valve can be controlled accurately by means of the fuel injection system of the internal combustion engine in order thus to obtain an essentially constant lambda value for the air/fuel mixture supplied. When the internal combustion engine is cold, however, fuel will condense on the comparatively cold walls in the intake duct and in the cylinder. The fuel condensed on the walls will be vaporized during idle running and accompany the air/fuel mixture which is flowing in the intake duct and being supplied to the cylinder space. If the vaporization of the fuel condensed on the walls is uneven, on account of pressure variations, temperature gradients, or the flow rate of the air/fuel mixture in the intake duct, a variation of the lambda value of the air/fuel mixture supplied to the cylinder space will occur.

As the torque generated by the internal combustion engine will vary during idle running when cold-started, the speed of the internal combustion engine will vary. In this connection, the speed of the internal combustion engine means the speed of rotation of the crankshaft of the internal combustion engine. When the speed varies, the pressure in the intake duct will also vary, which in turn leads to the vaporization of the condensed fuel varying, so that a variation of the lambda value of the air/fuel mixture supplied to the cylinder space occurs. The uneven speed of the internal combustion engine is thus intensified.

The object of the present invention is to reduce carbon monoxide CO, hydrocarbon compounds HC and nitrogen oxides NOx in the exhaust gases from an internal combustion engine when cold-started.

Another object of the invention is to make it possible for an internal combustion engine to work with a lean air/fuel mixture.

A further object of the invention is to reach the working temperature of the catalytic converter as rapidly as possible.

This is achieved by a method of the type indicated in the introduction, which comprises the steps: an air/fuel mixture with a lambda value greater than 1 is supplied to the cylinder, the intake valve is controlled so that it opens, during the intake stroke, after the piston has passed the top dead-centre position.

By supplying an air/fuel mixture greater than 1 to the cylinder, said emissions in the exhaust gases emitted from the internal combustion engine are reduced. The internal combustion engine will work at an essentially constant speed during idle running when the intake valve is controlled so that it opens after the piston has passed the top dead-centre position and when the exhaust valve is controlled so that it closes before the intake valve opens. Exhaust gases are thus prevented from flowing into the intake duct, as a result of which even vaporization of the fuel condensed on the walls of the intake duct is obtained. By opening the intake valve after the piston has passed the top dead-centre position, powerful swirling of the air/fuel mixture supplied to the cylinder space is also obtained. By controlling the exhaust valve so that it opens before the piston has passed the bottom dead-centre position, the expansion stroke of the piston in the cylinder is interrupted, and very hot exhaust gases flow out through the exhaust duct and on to the catalytic converter which will thus be heated rapidly.

The invention is described in greater detail below by means of an exemplary embodiment shown in the appended drawings, in which
Fig. 1 shows a section through an internal combustion engine,
Fig. 2 shows a diagram of the opening and closing times of both intake and exhaust valves, and
Fig. 3 shows a diagram of the heating time of the catalytic converter for a conventionally controlled internal combustion engine and an internal combustion engine controlled according to the method according to the present invention.

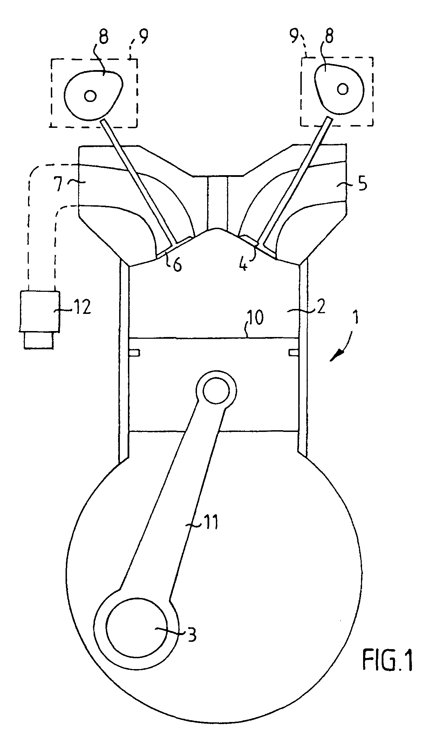

Fig. 1 shows an internal combustion engine 1 which comprises at least one cylinder 2 to which an air/fuel mixture is supplied when a crankshaft 3 of the internal combustion engine 1 is to be made to rotate. At least one intake valve 4 is arranged so as to open and close intake ducts 5 which are connected to the cylinder 2 and through which an air/fuel mixture is supplied when the engine 1 is working. At least one exhaust valve 6 is arranged so as to open and close exhaust ducts 7 which are connected to the cylinder 2 and through which burnt fuel in the form of exhaust gases is removed when the engine 1 is working. The internal combustion engine 1 also comprises control members 8 arranged so as to control the opening and closing of the intake and exhaust valves 4, 6. In the exemplary embodiment shown in Fig. 1, the control members 8 consist of camshafts which can be adjustable so that the opening and closing time of the intake and exhaust valves 4, 6 can be varied. This is brought about by, for example, a regulating arrangement 9 which is shown diagrammatically in Fig. 1 and in a manner known per se rotates the camshafts hydraulically. Other control members 8 are also possible, such as electromagnetically controlled valves. A piston 10, which reciprocates between a top and a bottom dead-centre position in the cylinder 2, is mounted on the crankshaft 3 by means of a connecting rod 11. The internal combustion engine 1 is preferably of the four-cylinder four-stroke type.

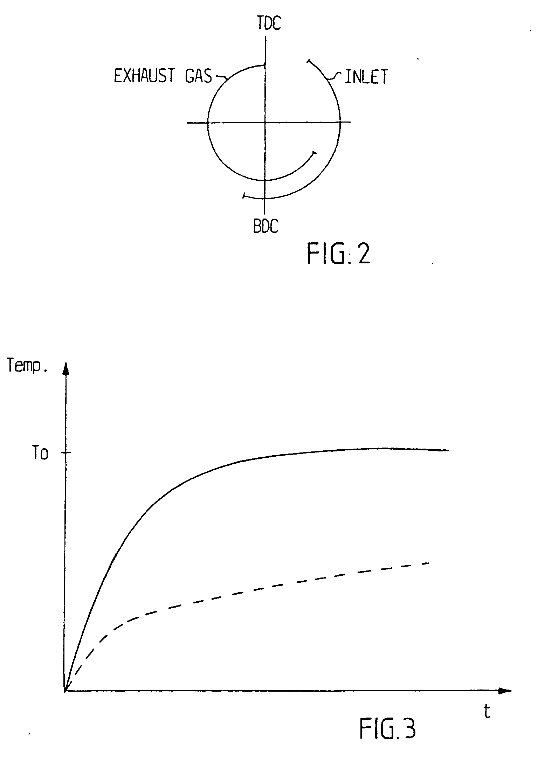

An exemplary embodiment of the method according to the present invention is shown in Fig. 2 which shows a diagram of the opening and closing times of both intake and exhaust valves 4, 6. During the intake stroke, an air/fuel mixture with a lambda value greater than 1 is supplied to the cylinder 2. The lambda value lies essentially in the range 1.1 - 1.4 and preferably in the range 1.1 - 1.2. The content of carbon monoxide CO, hydrocarbon compounds HC and nitrogen oxides NOx in the exhaust gases depends on inter alia the mixing ratio of the air/fuel mixture supplied to the cylinder 2. This mixing ratio is usually indicated by a lambda value. The definition of the lambda value, or the excess air factor as it is also known, is the actual air quantity supplied divided by the air quantity theoretically necessary. If the lambda value is greater than one, the air/fuel mixture is lean and, if the lambda value is smaller than one, the air/fuel mixture is rich. The aim is to supply a lean air/fuel mixture when the internal combustion engine is cold, so that the content of carbon monoxide CO, hydrocarbon compounds HC and nitrogen oxides NOx which are emitted from the internal combustion engine 1 in the form of exhaust gases is low.

In order that the operation of the internal combustion engine 1 does not become uneven when a lean air/fuel mixture is supplied, for the reasons indicated in the introduction to the description, the intake valve 4 is controlled so that it opens after the piston 10 has passed the top dead-centre position. By controlling the intake valve 4 so that it opens, during the intake stroke, at a crankshaft angle of 20° - 100° after the top dead-centre position, preferably at a crankshaft angle of 30° after the top dead-centre position, a negative pressure is brought about in the cylinder 2. A prerequisite for a negative pressure being formed in the cylinder 2, however, is that the exhaust valve 6 is controlled so that it closes before the intake valve 4 opens. The exhaust valve 6 is preferably controlled so that it closes when the piston 10 is at top dead centre. Both the exhaust valve 6 and the intake valve 4 are thus closed at the same time as the piston 10 moves downwards in the direction of the bottom dead-centre position, as a result of which a negative pressure is formed in the cylinder 2. It is possible, however, to close the exhaust valve 6 after the piston 10 has passed the top dead-centre position, as the intake valve 4 is controlled so that it opens after the piston 10 has passed the top dead-centre position. When the intake valve 4 is then opened, the air/fuel mixture flows into the cylinder 2 at a great flow rate on account of the negative pressure in the cylinder 2. This great flow rate contributes to a desirable swirling and thus mixing of the air/fuel mixture. By opening the intake valve 4, as described above, exhaust gases are also prevented from flowing into the intake duct 5. If exhaust gases were to flow into the intake duct 5, it would affect the vaporization of fuel condensed in the walls of the intake duct 5, which would lead to a change in torque of the crankshaft 3 of the internal combustion engine 1, and thus uneven operation of the internal combustion engine 1. In this connection, crankshaft angle means the angle through which the crankshaft 3 has rotated since the piston 10 was located in the top dead-centre position. When the piston 10 is located in the top dead-centre position, the crankshaft angle is therefore zero.

The intake valve 4 can be controlled so that it closes after the piston 10 has reached the bottom dead-centre position.

When a cold internal combustion engine 1 is started, a catalytic converter 12 arranged in the internal combustion engine 1 is also cold. As mentioned in the introduction to the description, the catalytic converter 12 has to reach a certain working temperature in order for the catalytic converter 12 to be capable of effectively reducing the toxic emissions in the exhaust gases of the internal combustion engine 1. Ignition of the air/fuel mixture supplied to the cylinder 2 is carried out at a crankshaft angle of 10° before to 30° after the top dead-centre position, preferably at a crankshaft angle of 0° - 10° after the top dead-centre position. By controlling the exhaust valve 6, as the method according to the present invention proposes, so that it opens before the piston 10 has passed the bottom dead-centre position during the expansion stroke, expansion is interrupted, and very hot exhaust gases will thus flow through the exhaust duct 7 and on to the catalytic converter 12. The catalytic converter 12 will therefore be heated very rapidly to the desired working temperature by the hot exhaust gases. It has been found that if the exhaust valve 6 is controlled so that it opens at a crankshaft angle of 90° - 130° after the top dead-centre position, preferably at a crankshaft angle of 100° after the top dead-centre position, the working temperature of the catalytic converter 12 will be reached very rapidly. The opening time of the exhaust valve 6 will therefore be relatively long. Fig. 3 shows a diagram of the heating time of the catalytic converter 12 for a conventionally controlled internal combustion engine and an internal combustion engine 1 controlled according to the method according to the present invention. The solid curve in Fig. 3 relates to the heating time of the catalytic converter 12 for an internal combustion engine controlled according to the method according to the present invention, and the broken line relates to the heating time of the catalytic converter for a conventionally controlled internal combustion engine. As can be seen from the diagram in Fig. 3, the catalytic converter 12 of the internal combustion engine controlled according to the method according to the present invention will reach the working temperature To more rapidly than the catalytic converter of the engine controlled conventionally.

The internal combustion engine 1 can be supercharged by means of an exhaust turbo or a mechanical compressor (not shown). In a supercharged internal combustion engine 1, energy is supplied from the compressor or the turbo, so that the combustion temperature after expansion in the cylinder increases further. The catalytic converter can thus also be heated more rapidly.

The method according to the invention is preferably used when the temperature of the catalytic converter 12 is lower than its working temperature To. A sensor (not shown) can be arranged on the catalytic converter 12 in order to determine the temperature of the catalytic converter 12. Alternatively, the temperature of the engine 1 can be measured so as thus to estimate the temperature of the catalytic converter 12. When the working temperature To of the catalytic converter 12 has been reached, the intake and exhaust valves 4, 6 and the ignition are controlled so that the engine 1 works optimally for the prevailing operating conditions.

## Claims

1. Method of reducing emissions in the exhaust gases of an internal combustion engine (1) which comprises at least one cylinder (2) to which an air/fuel mixture is supplied when a crankshaft (3) of the internal combustion engine (1) is to be made to rotate, at least one intake valve (4), at least one exhaust valve (6), control members (8) for controlling the opening and closing of the intake and exhaust valves (4, 6), and a piston (10) reciprocating between a top dead-centre position and a bottom dead-centre position in the cylinder (2), which exhaust valve (6) is controlled so that it opens before the piston (10) has passed the bottom dead-centre position and closes before the intake valve (4) opens, **characterized in that** the method comprises the following steps: an air/fuel mixture with a lambda value greater than 1 is supplied to the cylinder (2), and the intake valve (4) is controlled so that it opens, during the intake stroke, after the piston (10) has passed the top dead-centre position.

2. Method according to Claim 1, **characterized in that** the exhaust valve (6) is controlled so that it opens at a crankshaft angle of 90° - 130° after the top dead-centre position, preferably at a crankshaft angle of 100° after the top dead-centre position.

3. Method according to Claim 1 or 2, **characterized in that** the exhaust valve (6) is controlled so that it closes when the piston (10) is located in the top dead-centre position.

4. Method according to any one of the preceding claims, **characterized in that** the intake valve (4) is controlled so that it opens at a crankshaft angle of 20° - 100° after the top dead-centre position, preferably at a crankshaft angle of 30° after the top dead-centre position.

5. Method according to any one of the preceding claims, **characterized in that** ignition of the air/fuel mixture supplied to the cylinder (2) is carried out at a crankshaft angle of 10° before to 20° after the top dead-centre position, preferably at a crankshaft angle of 0° - 10° after the top dead-centre position.

6. Method according to any one of the preceding claims, **characterized in that** the lambda value of the air/fuel mixture supplied to the cylinder (2) lies essentially within the range 1.1 - 1.4 and preferably within the range 1.1 - 1.2.

7. Method according to any one of the preceding claims, **characterized in that** the method is used essentially when cold-starting the internal combustion engine (1).

8. Method according to any one of the preceding claims, **characterized in that** control members (8) for controlling the opening and closing of the intake and exhaust valves (4, 6) are adjustable, so that the opening and closing time of the intake and exhaust valves (4, 6) can be varied.

## Patentansprüche

1. Verfahren zum Verringern von Emissionen in den Abgasen einer Brennkraftmaschine (1), die zumindest einen Zylinder (2) aufweist, welchem eine Luft/Kraftstoffmischung zugeführt wird, wenn eine Kurbelwelle (3) der Brennkraftmaschine (1) zur Drehung veranlasst wird, zumindest ein Einlassventil (4), zumindest ein Auslassventil (6), Steuerteile (8) zum Steuern des Öffnens und Schließens der Einlass- und Auslassventile (4, 6), und einen Kolben (10), der sich zwischen der Position eines oberen Totpunktes und der Position eines unteren Totpunktes in dem Zylinder (2) hin- und herbewegt, wobei das Auslassventil (6) so gesteuert wird, dass es öffnet, bevor der Kolben (10) die Position des unteren Totpunktes durchquert hat, und schließt, bevor das Einlassventil (4) öffnet, **dadurch gekennzeichnet, dass** das Verfahren die folgenden Schritte aufweist: eine Luft/Kraftstoffmischung mit einem Wert von Lambda von größer als 1 wird dem Zylinder (2) zugeführt, und das Einlassventil (4) wird so gesteuert, dass es öffnet, während des Einlasshubs, nachdem der Kolben (10) die Position des oberen Totpunktes durchquert hat.

2. Verfahren nach Anspruch 1, **dadurch gekennzeichnet, dass** das Auslassventil (6) so gesteuert wird, dass es bei einem Kurbelwellenwinkel von 90° bis 130° nach der Position des oberen Totpunkts öffnet, vorzugsweise bei einem Kurbelwellenwinkel von 100° nach der Position des oberen Totpunktes.

3. Verfahren nach Anspruch 1 oder 2, **dadurch gekennzeichnet, dass** das Auslassventil (6) so gesteuert wird, dass es schließt, wenn sich der Kolben (10) in der Position des oberen Totpunktes befindet.

4. Verfahren nach einem der voranstehenden Ansprüche, **dadurch gekennzeichnet, dass** das Einlassventil (4) so gesteuert wird, dass es bei einem Kurbelwellenwinkel von 20° bis 100° nach der Position des oberen Totpunkts öffnet, bevorzugt bei einem Kurbelwellenwinkel von 30° nach der Position des oberen Totpunktes.

5. Verfahren nach einem der voranstehenden Ansprüche, **dadurch gekennzeichnet, dass** die Zündung der Luft/Kraftstoffmischung, die dem Zylinder (2) zugeführt wird, bei einem Kurbelwellenwinkel von 10° vor bis 20° nach der Position des oberen Totpunkts durchgeführt wird, bevorzugt bei einem Kurbelwellenwinkel von 0° bis 10° nach der Position des oberen Totpunktes.

6. Verfahren nach einem der voranstehenden Ansprüche, **dadurch gekennzeichnet, dass** der Wert von Lambda der Luft/Kraftstoffmischung, die dem Zylinder (2) zugeführt wird, im wesentlichen innerhalb des Bereiches von 1,1 bis 1, 4 liegt, und bevorzugt innerhalb des Bereiches von 1,1 bis 1, 2.

7. Verfahren nach einem der voranstehenden Ansprüche, **dadurch gekennzeichnet, dass** das Verfahren im wesentlichen beim Kaltstart der Brennkraftmaschine (1) eingesetzt wird.

8. Verfahren nach einem der voranstehenden Ansprüche, **dadurch gekennzeichnet, dass** Steuerteile (8) zum Steuern des Öffnens und des Schließens der Einlass- und Auslassventile (4, 6) einstellbar sind, sodass die Öffnungs- und Schließzeit der Einlass- und Auslassventile (4, 6) geändert werden kann.

## Revendications

1. Une méthode de réduction des émissions dans les gaz d'échappement d'un moteur à combustion interne (1) qui comporte au moins un cylindre (2) auquel un mélange air/carburant est fourni quand un vilebrequin (3) du moteur à combustion interne (1) est mis en rotation, au moins une soupape d'admission (4), au moins une soupape d'échappement (6), des organes de commande (8) pour commander l'ouverture et la fermeture des soupapes d'admission et d'échappement (4, 6), et un piston (10) à mouvement de va-et-vient entre une position de point mort haut et une position de point mort bas dans le cylindre (2), laquelle soupape d'échappement (6) est commandée afin qu'elle ouvre avant que le piston (10) ait passé la position de point mort bas et ferme avant que la soupape d'admission (4) ouvre, **caractérisée en ce que** la méthode comporte les étapes suivantes: un mélange air/carburant avec une valeur lambda supérieure à 1 est fournie au cylindre (2), et une soupape d'admission (4) est commandée afin qu'elle ouvre, pendant la course d'admission, après que le piston (10) ait passé la position de point mort haut.

2. Une méthode selon la revendication 1, **caractérisée en ce que** la soupape d'échappement (6) est commandée afin qu'elle ouvre à un angle de vilebrequin de 90° - 130° après la position de point mort haut, préférablement à un angle de vilebrequin de 100° après la position de point mort haut.

3. Une méthode selon la revendication 1 ou 2, **caractérisée en ce que** la soupape d'échappement (6) est commandée afin qu'elle ferme lorsque le piston (10) est situé dans la position de point mort haut.

4. Une méthode selon l'une quelconque des revendications précédentes, **caractérisée en ce que** la soupape d'admission (4) est commandée afin qu'elle ouvre à un angle de vilebrequin de 20° - 100° après la position de point mort haut, préférablement à un angle de vilebrequin de 30° après la position de point mort haut.

5. Une méthode selon l'une quelconque des revendications précédentes, **caractérisée en ce que** l'allumage du mélange air/carburant fourni au cylindre (2) est effectué à un angle de vilebrequin de 10° avant jusqu'à 20° après la position de point mort haut, préférablement à un angle de vilebrequin de 0° - 10° après la position de point mort haut.

6. Une méthode selon l'une quelconque des revendications précédentes, **caractérisée en ce que** la valeur lambda du mélange air/carburant fourni au cylindre (2) se situe essentiellement dans la gamme de 1.1 - 1.4 et préférablement dans la gamme de 1.1 - 1.2.

7. Une méthode selon l'une quelconque des revendications précédentes, **caractérisée en ce que** la méthode est utilisée essentiellement lors d'un démarrage à froid du moteur à combustion interne (1).

8. Une méthode selon l'une quelconque des revendications précédentes, **caractérisée en ce que** les organes de commande (8) pour commander l'ouverture et la fermeture des soupapes d'admission et d'échappement (4, 6) sont ajustables, afin que le temps d'ouverture et de fermeture des soupapes d'admission et d'échappement (4, 6) puisse être varié.
